Europäisches Patentamt

European Patent Office

Office européen des brevets

(11) Publication number: **0 361 371**
**A2**

# EUROPEAN PATENT APPLICATION

(21) Application number: **89117696.8**

(22) Date of filing: **25.09.89**

(51) Int. Cl.5: **C08F 10/06 , C08F 2/34 , C08F 4/646**

(30) Priority: **26.09.88 US 249775**

(43) Date of publication of application:
**04.04.90 Bulletin 90/14**

(84) Designated Contracting States:
**AT BE CH DE ES FR GB GR IT LI LU NL SE**

(71) Applicant: **UNION CARBIDE CHEMICALS AND PLASTICS COMPANY INC. (a New York corporation)**
**39 Old Ridgebury Road**
**Danbury Connecticut 06817-0001(US)**

(72) Inventor: **Mialki, William Stanley**
**221 Ten Eyck Road**
**Bridgewater New Jersey 08807(US)**
Inventor: **Noshay, Allen**
**66 Wellington Road**
**East Brunswick New Jersey 08816(US)**

(74) Representative: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8 D-8000 München 40(DE)**

(54) Process for the preparation of alphaolefin polymers.

(57) A process for homopolymerization or copolymerization comprising contacting propylene or a mixture of alpha-olefins having 2 to 8 carbon atoms containing a major proportion of propylene in the gas phase in at least one reaction zone, under polymerization conditions, with a catalyst system comprising (i) a solid catalyst precursor, which includes magnesium, titanium, a halogen which is chlorine, bromine, or iodine, and a polycarboxylic acid ester containing two ester groups attached to two adjacent carbon atoms wherein the two adjacent carbon atoms and the two carbonyl carbon atoms are coplanar; (ii) a hydrocarbylaluminum cocatalyst; and (iii) a silicon compound having the following formula:

$R_aSi(OR')_b$

wherein
R = a branched chain alkyl having 3 to 20 carbon atoms
R' = a hydrocarbyl group having 1 to 20 carbon atoms
each R and R' is alike or different
a = an integer from 1 to 3
b = an integer from 1 to 3
a + b = 4
with the proviso that the atomic ratio of aluminum to silicon is in the range of about 0.5:1 to about 100:1 and the atomic ratio of aluminum to titanium is in the range of about 5:1 to about 300:1.

## PROCESS FOR THE PREPARATION OF ALPHA-OLEFIN POLYMERS

Technical Field

This invention relates to a process for the preparation of homopolymers and copolymers of alpha-olefins.

Background Art

In European patent application No. 88 107 969.3, which is incorporated by reference herein, a process is provided for producing stereoregular polymers. More particularly, it was found that polymers having an isotactic index of at least 96 percent could be prepared in high yield at high production rates by polymerizing an alpha-olefin in a low pressure gas phase fluidized bed process at temperatures in excess of $50°$C employing a catalyst system comprising (i) a solid catalyst precursor, which includes magnesium, titanium, halogen, and an inner electron donor, i.e., a polycarboxylic acid ester containing two ester groups attached to two adjacent carbon atoms wherein the two adjacent carbon atoms and the two carbonyl carbon atoms are coplanar; (ii) a hydrocarbylaluminum cocatalyst; and (iii) an outer electron donor or selectivity control agent, i.e., a silicon compound containing a silicon-oxygen-carbon linkage wherein the atomic ratio of aluminum to silicon is in the range of about 0.5:1 to about 100:1 and the atomic ratio of aluminum to titanium is in the range of about 5:1 to about 300:1.

While this process is found to be advantageous, optimization is desirable to achieve a reduction of objectionable by-products and greater control of molecular weight distribution and comonomer incorporation, particularly in the preparation of resins for low odor film applications and of high impact polymers for use in extrusion and injection molding applications.

Disclosure of the Invention

An object of this invention, therefore, is to provide a process for the preparation of film and high impact grade resins with reduced by-product formation whereby the control of molecular weight distribution and comonomer incorporation is enhanced.

Other objects and advantages will become apparent hereinafter.

According to the present invention, a process for homopolymerization or copolymerization has been discovered comprising contacting propylene or a mixture of alpha-olefins having 2 to 8 carbon atoms containing a major proportion of propylene in the gas phase in at least one reaction zone, under polymerization conditions, with a catalyst system comprising (i) a solid catalyst precursor, which includes magnesium, titanium, a halogen which is chlorine, bromine, or iodine, and a polycarboxylic acid ester containing two ester groups attached to two adjacent carbon atoms wherein the two adjacent carbon atoms and the two carbonyl carbon atoms are coplanar; (ii) a hydrocarbylaluminum cocatalyst; and (iii) a silicon compound having the following formula:

$R_aSi(OR')_b$

wherein

R = a branched chain alkyl having 3 to 20 carbon atoms

R' = a hydrocarbyl group having 1 to 20 carbon atoms

each R and R' is alike or different

a = an integer from 1 to 3

b = an integer from 1 to 3

a + b = 4

with the proviso that the atomic ratio of aluminum to silicon is in the range of about 0.5:1 to about 100:1 and the atomic ratio of aluminum to titanium is in the range of about 5:1 to about 300:1.

Detailed Description

The solid catalyst precursor can be prepared by a variety of techniques, e.g., halogenating a magnesium compound of the formula $MgRR'$ wherein R is an alkoxide or aryloxide group and R' is an alkoxide or aryloxide group or a halogen with a halogenated tetravalent titanium compound containing at least two halogen atoms in the presence of a halohydrocarbon and a polycarboxylic acid ester containing two ester groups attached to adjacent carbon atoms. The alkoxide groups can contain 1 to 8 carbon atoms and the aryloxide groups 6 to 10 carbon atoms. The halogen can be chlorine, bromine, or iodine.

Suitable magnesium compounds for use in the above described process for preparing the precursor are magnesium diethoxide, magnesium diisopropoxide, magnesium di-n-butoxide, magnesium diphenoxide, magnesium dinaphthoxide, ethoxy magnesium isobutoxide, ethoxy magnesium phenoxide, naphthoxy magnesium isoamyloxide, ethoxy magnesium bromide, isobutoxy magnesium chloride, phenoxy magnesium iodide, cumyloxy magnesium bromide, and naphthoxy magnesium chloride.

The halogenated tetravalent titanium compound contains at least two halogen atoms and can have up to two alkoxy and/or aryloxy groups. Examples are $TiCl_4$, $TiBr_4$, diethoxy titanium dibromide, isopropoxy titanium triiodide, dihexoxy titanium dichloride, and phenoxy titanium trichloride.

The halohydrocarbon, while preferably aromatic, can be aliphatic or alicyclic. Suitable halohydrocarbons are chlorobenzene, bromobenzene, dichlorobenzene, dichlorodibromobenzene, chlorotoluene, dichlorotoluene, chloronaphthalene, dibromomethane, trichloromethane, 1,2-dichloroethane, trichloroethane, dichlorofluoroethane, hexachloroethane, trichloropropane, chlorobutane, dichlorobutane, chloropentane, trichlorofluorooctane, tetrachloroisooctane, dibromodifluorodecane, dibromocyclobutane, and trichlorocyclohexane.

The halogenated tetravalent titanium compound and the halohydrocarbon preferably contain no more than 12 carbon atoms.

Suitable polycarboxylic acid esters are characterized by a molecularly rigid structure wherein two ester groups are attached to two adjacent carbon atoms of the molecule. In this case, the two adjacent carbon atoms and the two carbonyl atoms of the ester group are coplanar. Such esters include polycarboxylic acid esters containing two ester groups which are attached to (a) ortho carbon atoms of a monocyclic or polycyclic aromatic ring, each of said ester groups being further linked to a branched or unbranched chain hydrocarbon radical; (b) vicinal carbon atoms of a non-aromatic monocyclic or polycyclic ring and which lie in a syn configuration with respect to each other, each of said ester groups being further linked to a branched or unbranched chain hydrocarbon radical; or (c) vicinal double bonded carbon atoms of an unsaturated aliphatic compound and which lie in a syn configuration with respect to each other, each of said ester groups being further linked to a branched or unbranched chain hydrocarbon radical.

These polycarboxylic acid esters are derived from a suitable polycarboxylic acid and a monohydric alcohol having a linear hydrocarbon moiety which may be branched or unbranched. Examples of polycarboxylic acid esters are dimethyl phthalate, diethyl phthalate, di-n-propyl phthalate, diisopropyl phthalate, di-n-butyl phthalate, diisobutyl phthalate, di-tert-butyl phthalate, diisoamyl phthalate, di-tert-amyl phthalate, dineopentyl phthalate, di-2-ethylhexyl phthalate, di-2-ethyldecyl phthalate, diethyl-1,2-fluorenedicarboxylate, diisopropyl-1-,2-ferrocenedicarboxylate, cis-diisobutyl-cyclobutane-1,2-dicarboxylate, endo-diisobutyl-5-norbornene-2,3-dicarboxylate, and endo-diisobutyl-bicyclo[2.2.2]oct-5-ene-2, -3-dicarboxylate, diisobutyl maleate, and diisoamyl citraconate.

Halogenation of the magnesium compound in the above described process for preparing the precursor is effected employing an excess of titanium compound, about 2 mols to about 100 mols of titanium compound per mole of magnesium compound. The halohydrocarbon is employed in an amount sufficient to dissolve the titanium compound and the ester, and to adequately disperse the solid, insoluble magnesium compound. The magnesium compound can be used in an amount of about 0.005 to 2.0 mols of magnesium compound per mol of halohydrocarbon and the ester in an amount of about 0.0005 to about 2.0 mols of ester per mol of titanium compound. The halogenation of the magnesium compound can be carried out in a temperature range of about 60°C to about 150°C over a period of about 0.1 to about 6 hours. The halogenated product is a solid material which can be isolated from the liquid reaction medium by filtration or decantation. After separation, it is treated one or more times with the titanium compound in the same molar ratio to remove residuals and maximize catalyst activity. The halohydrocarbon is usually employed during this treatment to dissolve the titanium compound and disperse the halogenated product. The treatment is preferably carried out twice, the second treatment being in the presence of a polycarboxylic acid halide containing two coplanar acid groups attached to adjacent carbon atoms. About 5 to about 200 millimols of acid halide are generally employed per gram atom of magnesium. Suitable acid halides include phthaloyl dichloride, 2,3-naphthalenedi-carboxylic acid dichloride, endo-5-norbornene-2,3-dicarboxylic acid dichloride, maleic acid dichloride, and citraconic acid dichloride.

After the solid halogenated product has been treated one or more times with additional halogenated tetravalent titanium compound, it is separated from the liquid reaction medium, washed with an inert hydrocarbon to remove unreacted titanium compounds, and dried. The final washed product suitably has a titanium content of about 0.5 percent by weight to about 6.0 percent by weight. The atomic ratio of titanium to magnesium in the final product is in the range of about 0.01:1 to about 0.2:1. The polycarboxylic acid ester is present in a molar ratio of ester to magnesium of about 0.005:1 to about 10:1.

The hydrocarbyl aluminum cocatalyst can be represented by the formula $R_3Al$ wherein each R is an alkyl, cycloalkyl, aryl, or hydride radical; at least one R is a hydrocarbyl radical; two or three R radicals can be joined in a cyclic radical forming a heterocyclic structure; each R can be alike or different; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical, i.e., the radical can contain alkyl, aryl, and/or cycloalkyl groups. Examples of suitable radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, naphthal, methylnaphthyl, cyclohexyl, cycloheptyl, and cyclootyl.

Examples of suitable hydrocarbyl aluminum compounds are as follows: triisobutylaluminum, trihexylaluminum, di-isobutylaluminum hydride, dihexylaluminum hydride, isobutylaluminum dihydride, hexylaluminum dihydride, di-isobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. The preferred hydrocarbyl aluminums are triethylaluminum, triisobutylaluminum, trihexylaluminum, di-isobutylaluminum hydride, and dihexylaluminum hydride.

The silicon compound has the formula:

$R_aSi(OR')_b$

wherein

R = a branched chain alkyl having 3 to 20 carbon atoms

R' = a hydrocarbyl group having 1 to 20 carbon atoms

each R and R' is alike or different

a = an integer from 1 to 3

b = an integer from 1 to 3

a + b = 4

The branched chain alkyl preferably has 3 to 6 carbon atoms. Suitable branched chain alkyls are isopropyl, isobutyl, isopentyl, tert-butyl, 2,2-dimethylpropyl, and 2,2-dimethylbutyl. R' preferably is an alkyl having 1 to 3 carbon atoms and can be straight or branched chain. Suitable OR' groups are methoxy, ethoxy, propoxy and isopropoxy.

Examples of silicon compounds useful in the invention are diisobutyldimethoxysilane,

isobutyltrimethoxysilane,

diisopropyldimethoxysilane,

isopropyltrimethoxysilane,

ditertiarybutyldimethoxysilane,

t-butyltrimethoxysilane,

isobutylmethyldimethoxysilane,

diisobutyldiethoxysilane,

isobutylmethyldiisopropoxysilane,

isobutyltripropoxysilane, and

isopropyltriethoxysilane.

The polymer is prepared in the gas phase, generally, by continuously contacting the catalyst system with alpha-olefin in one or more fluidized bed reactors such as that described in United States Patent 4,482,687 or another conventional reactor for the gas phase production of, for example, polypropylene or propylene copolymers. The bed is usually made up of the same granular resin that is to be produced in the reactor. Thus, during the course of the polymerization, the bed comprises formed polymer particles, growing polymer particles, and catalyst particles fluidized by polymerizable and modifying gaseous components introduced at a flow rate or velocity sufficient to cause the particles to separate and act as a fluid. The fluidizing gas is made up of the initial feed, make-up feed, and cycle (recycle) gas, i.e., monomer and, if desired, modifiers and/or an inert carrier gas.

The essential parts of the reactor are the vessel, the bed, the gas distribution plate, inlet and outlet piping, a compressor, a cycle gas cooler, and a product discharge system. In the vessel, above the bed, there is a velocity reduction zone, and in the bed, a reaction zone. Both are above the gas distribution plate.

The fluidized bed, or other gas phase, reactor is operated at a temperature in the range of about 30° C to about 120° C and preferably at a temperature in the range of about 50° C to about 100° C. The operating pressure is in the range of about 300 psig to about 1100 psig or higher and preferably about 425 psig to about 800 psig. The alpha-olefin partial pressure is in the range of about 100 to about 1000 psi or higher. The preferred alpha-olefin partial pressure is in the range of about 300 psi to about 750 psi. The partial pressure of alpha-olefin is considered to be the total partial pressure of all of the alpha-olefins used in the process. The residence time of the alpha-olefin in the reactor is in the range of about 1 to about 20 hours and preferably about 3 to about 12 hours. The velocity of the fluidizing gas is in the range of about 0.1 to about 5.0 feet per second or higher and preferably about 0.5 to about 2.0 feet per second. Hydrogen or another chain transfer agent can be used in the process. The mole ratio of hydrogen to alpha-olefin used in the fluidized bed reactor is in the range of about 0.0005:1 to about 0.5:1 and is preferably in the range of about 0.001:1 to about 0.5:1. This translates into a hydrogen partial pressure in the range of about 0.05 psi to about 500 psi and preferably about 0.3 psi to about 375 psi. The balance of the operating pressure utilized in the reactor, i.e., after the partial pressure of one or more alpha-olefins and the hydrogen partial pressure are considered, can be made up by using an inert gas such as nitrogen.

Where it is desired to produce a propylene homopolymer, one fluidized bed reactor is used. Other polymers such as ethylene/propylene copolymers can be provided in one fluidized bed reactor, or, where desired, one or more fluidized bed reactors can be operated in series with the first.

In subject process, the components of the catalyst system are maintained in an amount such that the atomic ratio of aluminum in the cocatalyst to silicon in the selectivity control agent is about 0.5:1 to about 100:1, and preferably about 2:1 to about 50:1, and the atomic ratio of aluminum in the cocatalyst to titanium in the solid catalyst component is about 5:1 to 300:1, and preferably from about 10:1 to about 200:1.

Useful alpha-olefins preferably do not contain any branching on carbon atoms closer than two carbon atoms removed from the double bond. Examples of suitable alpha-olefins in addition to propylene include ethylene, 1-butene, 1-hexene, 4-methylpentene-1, 1-heptene, and 1-octene. The process can be used to prepare homopolymers or copolymers based on two or more monomers. The copolymer is generally based on a major proportion of propylene with up to 30 mol percent each of a second and/or third alpha-olefin.

One advantage of this invention is that catalyst response, i.e., catalyst productivity and resin tacticity, is only moderately effected when compared for example, with a catalyst system using diphenyldimethoxysilane while the level of objectionable by products is substantially reduced. The amount of selectivity control agent required to achieve the desired resin stereospecificity is approximately equal for all of the selectivity control agents. This equivalence results in no net increase in the ash content of the resins. Still another advantage is that the resin molecular weight distribution of the polymer can be tailored for specific applications. The ability to alter the resin molecular weight distribution can be used to improve product properties and, in some cases, eliminate costly post reactor resin molecular weight distribution tailoring. An added benefit is that proper selection of selectivity control agents can be used to alter the copolymerization behavior of the catalyst system by modifying the $C_3/C_2$ reactor feed ratio needed to achieve the desired $C_3/C_2$ ratio in the resin. For example, lower $C_3/C_2$ reactor feed ratios translate into higher catalyst polymerization rates due to the higher reactivity of ethylene over propylene, and thus a higher throughput can be achieved while decreasing residence time in the reactor. Further, changes in the selectivity control agent may alter the resin microstructure, i.e., the sequencing of ethylene and propylene in the copolymer. Changes in monomer sequence within the resin may translate into improved product properties and improved utilization of comonomer.

The invention is illustrated by the following examples:

Examples 1 to 3

Preparation of Solid Catalyst Component

To a solution of 70 milliliters of titanium tetrachloride (120 grams, 0.64 mol) in 3.7 liters of chlorobenzene are added, in succession, 180 milliliters of diisobutyl phthalate (187 grams, 0.67 mol), 590 grams (5.2 mols) of magnesium diethoxide, and a solution of 4.7 liters of titanium tetrachloride (8100 grams, 43 mols) in 1.2 liters of chlorobenzene. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a solution of 4.7 liters of titanium tetrachloride (8100 grams, 43 mols) in 1.2 liters of chlorobenzene at room temperature. A solution of 45 grams (0.22 mol) of phthaloyl

5

dichloride in 3.7 liters of chlorobenzene is added to the slurry at room temperature, and the resulting slurry is then heated to 110°C with stirring, the temperature being maintained for 30 minutes. At the end of this time, the mixture is filtered while hot, and a solid material is collected.

The solid material is reslurried in a solution of 4.7 liters of titanium tetrachloride (8100 grams, 43 mols) in 1.2 liters of chlorobenzene at room temperature. An additional 3.7 liters of chlorobenzene is then added to the slurry at room temperature, and the resulting slurry is heated to 110°C with stirring, the temperature being maintained in 30 minutes. At the end of this time, the mixture is filtered while hot. A solid material is collected.

The solid material is reslurried once again in a solution of 4.7 liters of titanium tetrachloride (8100 grams, 43 mols) in 1.2 liters of chlorobenzene at room temperature. An additional 3.2 liters of chlorobenzene is then added to the slurry at room temperature, and the resulting slurry is heated to 110°C with stirring, the temperature being maintained for 30 minutes. At the end of this time, the mixture is filtered while hot. The residue is washed 6 times with 500 milliliter portions of hexane at 25°C, and then dried under a nitrogen purge. The product weighs about 500 grams.

The solid catalyst component prepared in this manner is employed together with triethylaluminum, as cocatalyst, and the silanes listed in Table I, as selectivity control agent or outside electron donor, to polymerize propylene, under varying reaction conditions, in a fluidized bed reactor system similar to that described and illustrated in United States patents 4,302,565; 4,302,566; and 4,303,771, incorporated by reference herein.

In each polymerization, the solid catalyst component is continually fed to the polymerization reactor as a 30 percent dispersion in mineral oil. The triethylaluminum cocatalyst is employed as a 2.5 percent by weight solution in isopentane, and the silane selectivity control agent is employed as a 1 percent by weight solution in isopentane.

Hydrogen is added to the reactor as a chain transfer agent to regulate the molecular weight of the polymer produced. A small amount of nitrogen is also present.

The polymerization temperature is 80°C. Table I sets forth the variable conditions of these polymerizations, as well as the properties of the polymers produced by such polymerizations.

Table I

| Example | | 1 | 2 | 3 |
|---|---|---|---|---|
| 1. | selectivity control agent (SCA) | DPDMS | IBTMS | DIBDMS |
| 2. | partial pressure of propylene (psi) | 373 | 380 | 376 |
| 3. | Al/Ti (molar ratio) | 132 | 44 | 63 |
| 4. | Al/SCA (molar ratio) | 2.4 | 5.4 | 4.1 |
| 5. | melt flow (g/10 min) | 4.8 | 3.0 | 11.7 |
| 6. | xylene solubles (%) | 2.9 | 1.9 | 1.6 |
| 7. | benzene in resin (ppb) | >10 | N.D. | N.D. |
| 8. | benzene in pellets (ppb) | 500 | N.D. | 10 |

Notes to Tables:

1. DPDMS = diphenyldimethoxysilane
2. IBTMS = isobutyltrimethoxysilane
3. DIBDMS = diisobutyldimethoxysilane
4. Melt flow is determined under ASTM D-1238, Conductor L. It is measured at 230°C with a 2160 gram load and reported as grams per 10 minutes.
5. The xylene solubles value is the percentage by weight of atactic polypropylene based on the weight of the total resin. It is determined as follows: A sample of resin is weighed and completely dissolved in xylene in a flask by heating under reflux at 120°C with stirring. The flask is then immersed in a water bath at 25°C for one hour, during which time the insoluble polymer precipitates. The precipitate is filtered off, and the amount of soluble polymer present in the filtrate is determined by evaporating a 100 millimeter aliquot of the filtrate, drying the residue under vacuum and weighing the residue. The xylene soluble content is composed of amorphous material with some low molecular weight crystalline material.

6. Benzene analysis is conducted as follows: resin samples are pressed into plaques of 20 mil thickness and then extracted with 500 milliliters of a 95 percent by weight solution of ethanol according to FDA test procedures. The resulting solutions are then analyzed by gas chromatography/mass spectroscopy for benzene.

7. ppb = parts per billion by weight

8. N.D. = less than the detectable limit using the analysis set forth in paragraph 6 above.

## Examples 4 and 5

Polymerizations are conducted as described in Example 1 to prepare homopolypropylene resin. The polymerization conditions and the resin properties are set forth in Table II. The Al/Ti molar ratio is in the range of 50 to 100 and the Al/SCA molar ratio is in the range of 2 to 6.

TABLE II

| Example | | 4 | 5 |
|---|---|---|---|
| 1. | selectivity control agent (SCA) | IBTMS | DIBDMS |
| 2. | partial pressure of propylene (psi) | 380 | 380 |
| 3. | melt flow | 3.0 | 2.5 |
| 4. | xylene solubles (%) | 1.9 | 3.2 |
| 5. | MW/MN | 6.90 | 8.84 |
| 6. | MW x $10^{-3}$ | 384 | 400 |
| 7. | MN x $10^{-3}$ | 55.7 | 47.9 |

Notes to Tables:

9. MW = weight average molecular weight

10. MN = number average molecular weight

11. MW/MN = a measure of the breadth of the molecular weight distribution referred to as polydispersity

## Examples 6 to 38

The solid catalyst component prepared as in Example 1 is used to produce a propylene/ethylene copolymer. The copolymer is prepared employing sequential polymerization cycles to produce polymers having improved impact properties, e.g., by preparing highly isotactic homopolypropylene resin in a first fluidized bed reactor and subsequently copolymerizing propylene and ethylene to form an essentially amorphous random copolymer in a second fluidized bed reactor in the presence of the product of the first reactor.

In the first reactor, the partial pressure of propylene is 370 to 380 psi; the Al/Ti molar ratio is 40 to 80; the Al/SCA molar ratio is 2 to 4; and the polymerization temperature is 80°C. In the second reactor, the sum of the partial pressures of propylene and ethylene is 40 to 100 psi and the polymerization temperature is 70°C. Catalyst and component molar ratios are the same in the second reactor as the first reactor. The polymerizations are otherwise described as for Example 1. The selectivity control agent in examples 6 to 36 is DIBDMS and in examples 37 and 38 NPTMS (n-propyltrimethoxysilane).

The $C_3/C_2$ molar ratio and the percentage of resin base on ethylene are set forth in Table III.

## TABLE III

| Example | $C_3/C_2$ | E(%) |
|---|---|---|
| 6 | 1.26 | 57.0 |
| 7 | 1.31 | 58.1 |
| 8 | 1.34 | 57.8 |
| 9 | 1.35 | 57.3 |
| 10 | 1.35 | 58.5 |
| 11 | 1.36 | 57.0 |
| 12 | 1.39 | 57.9 |

## TABLE III

### (continued)

| Example | $C_3/C_2$ | E(%) |
|---|---|---|
| 13 | 1.40 | 56.6 |
| 14 | 1.44 | 59.0 |
| 15 | 1.48 | 56.0 |
| 16 | 1.50 | 52.4 |
| 17 | 1.50 | 55.5 |
| 18 | 1.51 | 56.3 |
| 19 | 1.52 | 55.8 |
| 20 | 1.54 | 55.4 |
| 21 | 1.59 | 51.2 |
| 22 | 1.60 | 49.5 |
| 23 | 1.60 | 51.6 |
| 24 | 1.63 | 54.5 |
| 25 | 1.65 | 53.1 |
| 26 | 1.69 | 50.6 |
| 27 | 1.70 | 50.3 |
| 28 | 1.70 | 51.1 |
| 29 | 1.70 | 51.9 |
| 30 | 1.71 | 50.9 |
| 31 | 1.71 | 51.2 |
| 32 | 1.71 | 53.3 |
| 33 | 1.72 | 51.9 |
| 34 | 1.74 | 52.1 |
| 35 | 1.80 | 47.2 |
| 36 | 1.80 | 50.8 |
| 37 | 2.30 | 51.1 |
| 38 | 2.57 | 53.1 |

Notes to Tables:

12. $C_3/C_2$ is the propylene/ethylene molar ratio in the gas phase.

13. E is the percent by weight (based on the weight of the copolymer) of ethylene incorporated into the propylene/ethylene copolymer produced in the second reactor. It is measured using infrared analysis.

It will be noted that in example 25 and 38, the portion of the copolymer based on ethylene is the same, i.e., 53.1 percent, and in examples 28 and 37, the portion of copolymer based on ethylene is also the same, i.e., 51.1 percent. In both cases, the silane containing the branched chain alkyl has a much lower $C_3/C_2$ molar ratio, i.e. 1.65 as against 2.30 and 1.70 as against 2.30. Thus, to achieve the same copolymer composition, it is generally observed that more ethylene can be used. Because, ethylene is more reactive than propylene, this translates into faster polymerization, more throughput, and more pounds of copolymer produced per unit of time.

## Claims

1. A process for homopolymerization or copolymerization comprising contacting propylene or a mixture of alpha-olefins having 2 to 8 carbon atoms containing a major proportion of propylene in the gas phase in at least one reaction zone, under polymerization conditions, with a catalyst system comprising (i) a solid catalyst precursor, which includes magnesium, titanium, a halogen which is chlorine, bromine, or iodine, and a polycarboxylic acid ester containing two ester groups attached to two adjacent carbon atoms wherein the two adjacent carbon atoms and the two carbonyl carbon atoms are coplanar; (ii) a hydrocarbylaluminum cocatalyst; and (iii) a silicon compound having the following formula:

$R_a Si(OR')_b$

wherein

R = a branched chain alkyl having 3 to 20 carbon atoms

R = a hydrocarbyl group having 1 to 20 carbon atoms

each R and R' is alike or different

a = an integer from 1 to 3

b = an integer from 1 to 3

a + b = 4

with the proviso that the atomic ratio of aluminum to silicon is in the range of about 0.5:1 to about 100:1 and the atomic ratio of aluminum to titanium is in the range of about 5:1 to about 300:1.

2. The process of claim 1 wherein the polymer produced is a propylene homopolymer or a copolymer of propylene and ethylene.

3. The process of one or both of the claims 1-2 wherein one of the alpha-olefins is ethylene or ethylene and 1-butene are present.

4. The process of one or more of the claims 1-3 wherein the atomic ratio of aluminum to silicon is in the range of about 2:1 to about 50:1 and the atomic ratio of aluminum to titanium is in the range of about 10:1 to about 200:1.

5. The process of one or more of the claims 1-4 wherein the process is carried out continuously and the reaction zone is a fluidized bed.

6. The process of one or more of the claims 1-5 wherein the solid catalyst precursor is obtained by halogenating a magnesium compound having the formula MgRR' wherein R is an alkoxide or aryloxide group and R' is R or halogen with a halogenated tetravalent titanium compound containing at least two halogen atoms in the presence of a halohydrocarbon and a polycarboxylic acid ester containing two ester groups attached to two adjacent carbon atoms wherein the two adjacent carbon atoms and the two carbonyl carbon atoms are coplanar.

7. The process of one or more of the claims 1-6 wherein the hydrocarbyl aluminum cocatalyst is a trialkylaluminum.

8. The process of one or more of the claims 1-7 wherein the magnesium compound is magnesium diethoxide, the halogenated tetravalent titanium compound is titanium tetrachloride, the halohydrocarbon is chlorobenzene, and the polycarboxylic acid is diisobutyl phthalate.

9. The process of claim 1 wherein R has 3 to 6 carbon atoms.

10. The process of claim 1 wherein R' has 1 to 3 carbon atoms.

11. The process of one or more of the claims 1-10 wherein the silicon compound is diisobutyldimethoxysilane, isobutyltrimethoxysilane or isobutylmethyldimethoxysilane.

12. The process of one or more of the claims 4-11 wherein ethylene and 1-hexene or 1-butene and 1-hexene are present.

13. An olefin polymer produced in accordance with the process of one or more of the claims 1-12.